# EUROPÄISCHE PATENTANMELDUNG

(11) **EP 2 490 089 A1**
(43) Veröffentlichungstag der Anmeldung: **22.08.2012**
(21) Anmeldenummer: 11154886.3
(22) Anmeldetag: 17.02.2011
(51) Int. Cl.: G05B 19/05, G05B 19/418

(54) **Verfahren zum Steuern eines Rezeptes eines Chargenprozesses**

(71) Anmelder: Siemens Aktiengesellschaft, 80333 München (DE)
(72) Erfinder: Varga, Vojtech, 76187, Karlsruhe (DE)

(57) **Zusammenfassung**

Die Erfindung betrifft ein Verfahren zum Steuern eines Rezeptes eines Chargenprozesses, welches mehrere Rezeptschritte (14, 15, 16) umfasst, die während mindestens eines Bearbeitungszyklus (17) sequentiell verarbeitet werden, wobei ein auf einen der Rezeptschritte (14, 15) folgender Rezeptschritt (15, 16) nach einem Schrittwechsel (19, 20) verarbeitet wird. Es werden Maßnahmen vorgeschlagen, wodurch während der sequentiellen Verarbeitung der Rezeptschritte (14, 15, 16) die Schrittwechselzeiten reduziert werden.

## Beschreibung

Die Erfindung betrifft ein Verfahren zum Steuern eines Rezeptes eines Chargenprozesses, welches mehrere Rezeptschritte umfasst, die während mindestens eines Bearbeitungszyklus sequentiell verarbeitet werden, wobei ein auf einen der Rezeptschritte folgender Rezeptschritt nach einem Schrittwechsel verarbeitet wird. Ferner betrifft die Erfindung eine Automatisierungseinrichtung, welche zur Durchführung des Verfahrens geeignet ist.

Ein derartiges Verfahren sowie eine derartige Automatisierungseinrichtung ist aus dem Siemens-Katalog "ST PCS 7 - Februar 2010", SIMATIC PCS 7, Kapitel 10 bekannt. Im Rahmen einer so genannten Batch-Automatisierung steuern Rezepte Herstellungsprozesse innerhalb industrieller Fertigungen, beispielsweise in Fertigungen der Automobil-, Pharma- oder Nahrungsmittelindustrie. In Abhängigkeit des eingesetzten Rezepts weisen einzelne Fertigungs- bzw. Rezeptschritte kurze oder lange Laufzeiten auf, wobei im Rahmen eines so genannten Schrittwechsels von einem Schritt zu einem nächsten Schritt gewechselt wird. Der zeitliche Abstand zwischen dem Beenden eines Rezeptschrittes, z. B. "Dosieren", bis zum Starten eines auf diesen Rezeptschritt folgenden nächsten Rezeptschrittes, beispielsweise "Heizen", wird als Schrittwechselzeit bzw. Schrittwechseldauer bezeichnet. Diese sollte gewöhnlich gering sein, um die Rezeptschritte eines Rezeptes möglichst während nur eines Bearbeitungszyklus verarbeiten zu können.

Insbesondere in der milchverarbeitenden Industrie oder im Rahmen der Herstellung von Bier in Brauereien ist eine schnelle Abfolge von Rezept- bzw. Fertigungsschritten zwingend sowie ein häufiger Schrittwechsel erforderlich. Für derartige Fertigungen ist die Zeitdauer für den Wechsel von einem Schritt in den nächsten gering zu halten; denn beispielsweise kommt es gemittelt über einen längeren Zeitraum zu nicht unerheblichen Produktions- bzw. Fertigungsverzögerungen für den Fall eines häufigen Schrittwechsels und für den Fall, dass die Schrittwechseldauer bis zu 12 Sekunden erfordert.

Um die Schrittwechselzeit zu minimieren, ist gewöhnlich vorgesehen, in einer Automatisierungseinrichtung, welche mindestens einen Batch-Server und ein Automatisierungsgerät umfasst, wesentliche Teile der auf dem Batch-Server ablaufenden Rezeptlogik auf dem Automatisierungsgerät ablaufen zu lassen, wobei dazu die zur Rezeptlogik korrespondierende Rezeptbeschreibung für das Automatisierungsgerät entsprechend angepasst wird. Dadurch werden für das Automatisierungsgerät relevante Daten innerhalb des Automatisierungsgerätes umgesetzt und müssen nicht zunächst einen Bedien- und Beobachtungs-Server der Automatisierungseinrichtung durchlaufen. Nachteilig ist allerdings, dass in diesem Fall die in Wirkverbindung stehenden Teile des Rezepts auf unterschiedlichen Geräten - also auf dem Batch-Server und dem Automatisierungsgerät - betrieben werden, was bedeutet, dass der Bedienkomfort für einen Anwender, z. B. aufgrund des damit verbundenen Verzichts auf ein so genanntes Chargenplanungstool, stark vermindert wird. Darüber hinaus ist ein hoher Speicherbedarf im Automatisierungsgerät erforderlich, was kostenintensiv ist, insbesondere für den Fall, dass dann ein Automatisierungsgerät höherer Leistungsklasse eingesetzt werden muss.

Der vorliegenden Erfindung liegt die Aufgabe zugrunde, ein Verfahren der eingangs genannten Art anzugeben, mittels welchem während der sequentiellen Verarbeitung von Rezeptschritten die Schrittwechselzeiten vermindert werden. Darüber hinaus ist eine geeignete Automatisierungseinrichtung zur Durchführung eines derartigen Verfahrens zu schaffen.

Im Hinblick auf das Verfahren wird diese Aufgabe durch die im kennzeichnenden Teil des Anspruchs 1 und im Hinblick auf die

Automatisierungseinrichtung durch die im kennzeichnenden Teil des Anspruchs 2 angegebenen Maßnahmen gelöst.

Vorteilhaft ist, dass unabhängig davon, ob der Batch-Server oder das Automatisierungsgerät das Rezept verarbeitet, geringe Schrittwechselzeiten ermöglicht werden, ohne dass system- oder produktbedingte Pausen zwischen zwei Bearbeitungszyklen verringert werden müssen oder der erforderliche Datenaustausch, der für einen sicheren Schrittwechsel benötigt wird, reduziert wird. Insbesondere für den Fall, dass ein Rezeptschritt ein so genannter NOP (No Operation)-Rezeptschritt ist, wird die Schrittwechselzeit erheblich vermindert.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: Bestandteile einer Automatisierungseinrichtung und
- Figur 2: eine vereinfachte Darstellung einer Schrittwechselsteuerung.

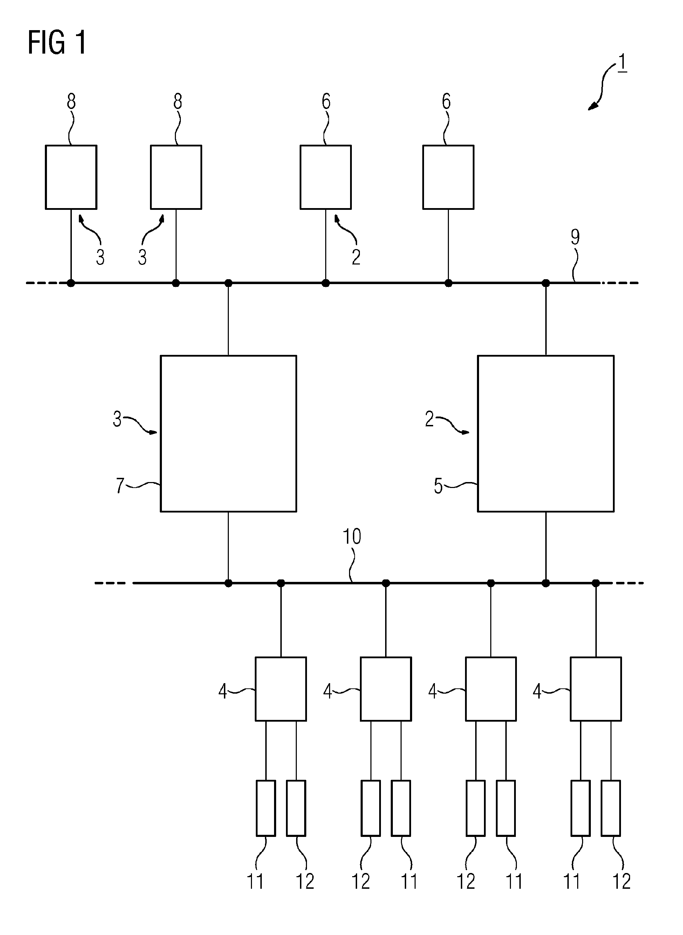

In Figur 1 sind mit 1 Bestandteile einer Automatisierungseinrichtung bezeichnet, die mit einem Operator-System 2, einem Batch-System 3 und Automatisierungsgeräten 4 versehen ist. Selbstverständlich weist die Automatisierungseinrichtung weitere hier nicht dargestellte Bestandteile bzw. Automatisierungskomponenten auf, z. B. Automatisierungskomponenten in Form von dezentralen Peripheriegeräten und/oder Engineering-Systemen und/oder Maintenance-Stationen. Das Operator-System 2 ist zum Bedienen und Beobachten eines Prozessablaufs in einer Anlage vorgesehen und weist einen OS-Server 5 und mehrere OS-Clients 6 auf, wobei das Operator-System 2 und das Batch-System 3, welches einen Batch-Server 7 und mehrere Batch-Clients 8 umfasst, über geeignete Busverbindungen 9, 10 mit den OS-Clients 6, den Batch-Clients 8 und den Automatisierungsgeräten 4 zum Austausch von Informationen verbunden sind. Ein Rezeptersteller formuliert mittels eines auf dem Batch-System 3 ablauffähigen Rezepteditors ein mehrere Rezeptschritte umfassendes Rezept, wobei der Rezeptersteller gewöhnlich sich eines an sich bekannten SFC (Sequential Function Chart)-Editors bedient und das Rezept in Form eines Funktionsplanes erstellt. Während der Steuerung des Chargenprozesses arbeitet der Batch-Server 7 den Funktionsplan sequentiell ab und korrespondierend dazu verarbeitet mindestens eines der Automatisierungsgeräte 4, welches mit dem Batch-Server 7 in Wirkverbindung steht, den Rezeptschritten zugeordnete Software-Funktionsbausteine gemäß der zur Rezeptlogik korrespondierenden Rezeptbeschreibung des mindestens einen Automatisierungsgerätes 4. Gewöhnlich übermitteln während der Steuerung des Chargenprozesses die Rezeptschritte den jeweiligen Funktionsbausteinen Sollwerte und die Funktionsbausteine den jeweiligen Rezeptschritten Istwerte, wobei aufgrund der Sollwerte Aktoren 12 angesteuert und von Sensoren 11 erfasste Signale, welche z. B. Temperatur- oder Druckwerte repräsentieren, als Istwerte eingelesen werden. Selbstverständlich ist es möglich, wesentliche Teile der Rezeptlogik auf einem der Automatisierungsgeräte 4 ablaufen zu lassen. Dazu werden die Rezeptbeschreibung des einen Automatisierungsgerätes 4 sowie die Funktionsbausteine entsprechend angepasst, wobei in diesem Fall der Batch-Server 7 lediglich den Chargen- bzw. Batchprozess auf dem einen Automatisierungsgerät 4 startet, Daten zur Darstellung auf einem der OS-Clients 6 oder zum Anzeigen des Prozessendes von den Funktionsbausteinen empfängt sowie ggf. dem einen Automatisierungsgerät 4 eine entsprechende Anweisung zum Anhalten des Prozesses übermittelt.

Die Rezeptschritte des Rezepts werden während mindestens eines Bearbeitungszyklus sequentiell verarbeitet, wobei ein Schrittwechsel beispielsweise von einem ersten Rezeptschritt zu einem auf diesen folgenden zweiten Rezeptschritt erst dann vollzogen wird, falls der erste Rezeptschritt dem zweiten Rezeptschritt die für den zweiten Rezeptschritt erforderlichen Daten bereitstellt und der zweite Rezeptschritt dem ersten Rezeptschritt den Erhalt der Daten quittiert.

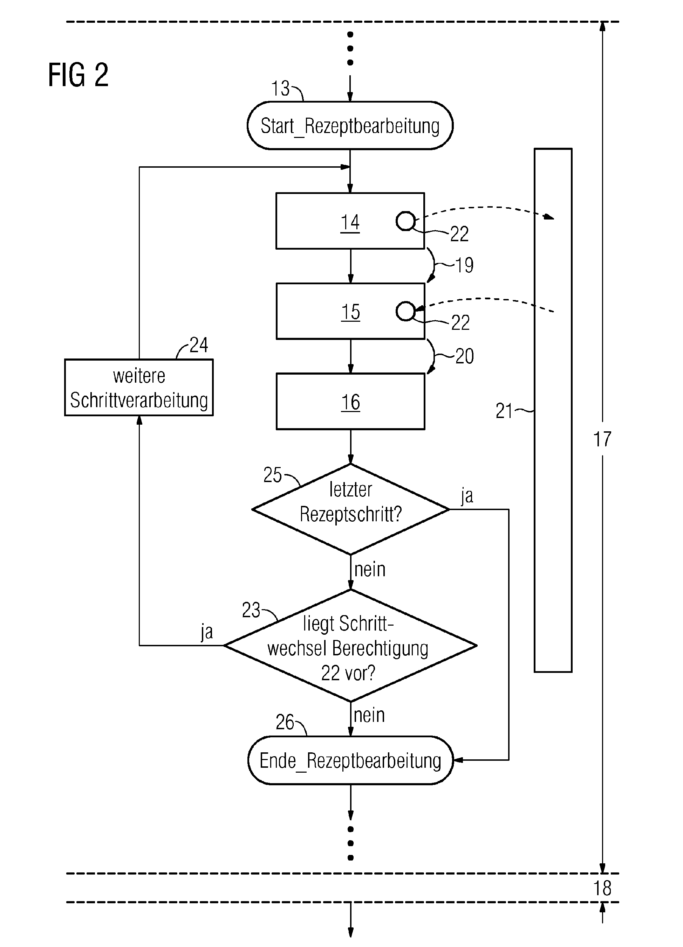

In diesem Zusammenhang wird im Folgenden auf Figur 2 verwiesen, in der in vereinfachter Form eine Schrittwechselsteuerung dargestellt ist. Nach dem Start 13 eines mehrere Rezeptschritte 14, 15, 16 umfassenden Rezeptes arbeitet ein Automatisierungsgerät diese Schritte 14, 15, 16 während eines Bearbeitungszyklus 17 des Automatisierungsgerätes ab, wobei system- oder produktbedingt zwischen den zwei aufeinander folgenden Bearbeitungszyklen eine Pause 18 eingefügt ist. Der auf den Rezeptschritt 14 folgende Rezeptschritt 15 wird erst nach einem Schrittwechsel 19 und der auf den Rezeptschritt 15 folgende Rezeptschritt 16 erst nach einem Schrittwechsel 20 verarbeitet, wobei ein auf dem Automatisierungsgerät ablaufender Steuerbaustein 21 die Schrittwechsel 19, 20 zwischen zwei aufeinander folgenden Schritten 14, 15 sowie 15, 16 einleitet. Es wird angenommen, dass der Rezeptschritt 14 aktuell verarbeitet wird und im Rahmen dieser Verarbeitung Daten erzeugt werden, welche dem folgenden Rezeptschritt 15 zur weiteren Verarbeitung bereitzustellen sind, wodurch der Schrittwechsel 19 vom Rezeptschritt 14 zum Rezeptschritt 15 eingeleitet werden kann. Der Schrittwechsel 19 wird eingeleitet, indem der Rezeptschritt 14 dem Steuerbaustein 21 eine Schrittwechselberechtigung 22 übermittelt. Der Steuerbaustein 21 wird dadurch benachrichtigt, dass die Schrittwechselberechtigung 22 freigegeben ist, was der Steuerbaustein im Rahmen eines Verarbeitungsschrittes 23 erkennt und worauf das Rezept durch das Automatisierungsgerät im Rahmen des Bearbeitungszyklus 17 weiterverarbeitet wird (Verarbeitungsschritt 24). Der Steuerbaustein 21 führt dazu dem Rezeptschritt 15 die Schrittwechselberechtigung 22 zu, aufgrund dessen der Rezeptschritt 15 die Weiterverarbeitung der von dem Rezeptschritt 14 bereitgestellten Daten startet. Der Schrittwechsel 19 ist somit abgeschlossen.

In der beschriebenen Art und Weise erfolgt der Schrittwechsel 20 vom Rezeptschritt 15 zum Rezeptschritt 16. Die Verarbeitung von Daten im Rahmen des Rezeptschritts 16 kann erst dann erfolgen, falls der Steuerbaustein 21 durch den Rezeptschritt 15 benachrichtigt wird, dass die Schrittwechselberechtigung 22 freigegeben ist, und der Steuerbaustein 21 dem Rezeptschritt 16 die Schrittwechselberechtigung 22 übermittelt. Wird der Steuerbaustein 21 nach einer Verarbeitung eines Rezeptschrittes durch das Automatisierungsgerät nicht über eine Schrittwechselberechtigung 22 benachrichtigt oder erkennt der Steuerbaustein 21, dass der letzte Rezeptschritt 16 verarbeitet wurde (Schritt 25), so ist die Rezeptbearbeitung (Schritt 26) abgeschlossen.

## Patentansprüche

1. Verfahren zum Steuern eines Rezeptes eines Chargenprozesses, welches mehrere Rezeptschritte (14, 15, 16) umfasst, die während mindestens eines Bearbeitungszyklus (17) sequentiell verarbeitet werden, wobei ein auf einen der Rezeptschritte (14, 15) folgender Rezeptschritt (15, 16) nach einem Schrittwechsel (19, 20) verarbeitet wird, **dadurch gekennzeichnet, dass** der Schrittwechsel (19, 20) eingeleitet wird, falls dem folgenden Rezeptschritt (15, 16) von einem Steuerbaustein (21) eine Berechtigung (22) übermittelt wird, welche dem Steuerbaustein (21) durch den einen Rezeptschritt (14, 15) zugeführt wird.

2. Automatisierungseinrichtung zum Steuern eines Rezeptes eines Chargenprozesses, welches mehrere Rezeptschritte (14, 15, 16) umfasst, wobei die Automatisierungseinrichtung (4, 7) dazu ausgebildet ist, die Rezeptschritte (14, 15, 16) während mindestens eines Bearbeitungszyklus (17) sequentiell zu verarbeiten und einen auf einen der Rezeptschritte (14, 15) folgenden Rezeptschritt (15, 16) nach einem Schrittwechsel (19, 20) zu bewerkstelligen, **dadurch gekennzeichnet, dass** die Automatisierungseinrichtung (4, 7) ferner dazu ausgebildet ist, einen Schrittwechsel (19, 20) einzuleiten, falls ein Steuerbaustein (21) der Automatisierungseinrichtung (4, 7) dem folgenden Rezeptschritt (15, 16) eine Berechtigung (22) übermittelt, welche der eine Rezeptschritt (14, 15) dem Steuerbaustein (21) zuführt.
